# EUROPEAN PATENT SPECIFICATION

(11) **EP 3 132 998 B1**
(45) Date of publication and mention of the grant of the patent: **08.08.2018**
(21) Application number: 14881860.2
(22) Date of filing: 16.06.2014
(51) Int. Cl.: B62D 55/24, B60B 9/00, B60B 9/12

(54) **WHEEL AND MOVING DEVICE**
RAD UND BEWEGUNGSVORRICHTUNG
ROUE ET DISPOSITIF MOBILE

(30) Priority: 05.02.2014 JP 2014020642
(43) Date of publication of application: 22.02.2017
(73) Proprietor: Kagami, Kazuo, Sagae-shi, Yamagata 991-0034 (JP)
(72) Inventor: Kagami, Kazuo, Sagae-shi, Yamagata 991-0034 (JP)
(74) Representative: Patent- und Rechtsanwälte Ullrich & Naumann
(86) International application number: PCT/JP2014/065943
(87) International publication number: WO 2015/118703

(56) References cited:
- EP-A1- 2 103 508
- EP-A2- 0 252 674
- WO-A1-2012/153170
- DE-A1-102012 000 316
- DE-U1-202011 000 463
- JP-A- H04 221 202
- JP-A- H10 273 075
- JP-A- H10 297 555
- JP-A- H10 297 555
- JP-A- H10 338 179
- JP-A- 2012 101 590
- US-A1- 2009 121 542

## Description

### Technical Field

The present invention relates to a wheel in which an outer wheel is rotated, and to a moving device in which a moving body is moved by an outer wheel rotating.

### Background Art

Japanese Patent Application Laid-Open (JP-A) No. 2013-71659 describes a tire wheel assembly in which a tire is assembled to an outer periphery of a wheel, and the inside of the tire is filled with air.

In this tire wheel assembly, when the tire is placed on a movement path, elastic force of the tire acts toward the side of the movement path, but is also dispersed in an axial direction of the tire. The Document WO 2012/153170 A1 discloses a wheel comprising an outer wheel that is configured in an annular shape, that has elastic properties, and that, when placed on a movement path, includes a contact portion contacting the movement path and undergoing elastic deformation wholly in a radial direction toward the opposite side to the movement path, and a support body that supports the outer wheel.

### SUMMARY OF INVENTION

### Technical Problem

In consideration of the above circumstances, an object of the present invention is to obtain a wheel and moving device capable of raising cushioning performance.

### Solution to Problem

A wheel of a first aspect of the present invention includes: an outer wheel that is configured in an annular shape, that has elastic properties, and that, when placed on a movement path, includes a contact portion contacting the movement path and undergoing elastic deformation wholly in a radial direction toward the opposite side to the movement path; and a support body that rotatably supports the outer wheel and that is capable of idling rotation under inertia when the outer wheel is not placed on the movement path.

A wheel of a second aspect of the present invention includes: an outer wheel that is configured in an annular shape and that has elastic properties; and a support body that rotatably supports the outer wheel, and that is disposed at a separation from a peripheral direction portion of the outer wheel, the peripheral portion contacting a movement path of the outer wheel when the outer wheel has been placed on the movement path and undergoing elastic deformation toward the opposite side to the movement path and that is capable of idling rotation under inertia when the outer wheel is not placed in the movement path.

A wheel of a third aspect of the present invention includes an outer wheel that is configured by a circular ring shaped crawler track, and that has elastic properties, and that is capable of idling rotation under inertia when the outer wheel is not placed on a movement path.

A wheel of a fourth aspect of the present invention is the wheel of either the first aspect or the second aspect, further including an inner wheel that is provided to the support body, that is capable of rotating, and that rotatably supports the outer wheel.

A wheel of a fifth aspect of the present invention is the wheel of any one of the first aspect to the fourth aspect, further including a suppression portion that is provided to an outer periphery of the outer wheel, and that suppresses slippage with respect to a movement path.

A moving device of a sixth aspect of the present invention includes the wheel of any one of the first aspect to the fifth aspect; and a moving body that supports the outer wheel, and that is moved by the outer wheel being rotated in a state placed on a movement path.

A moving device of a seventh aspect of the present invention is the moving device of the sixth aspect, further including drive means that drives and rotates the outer wheel. Advantageous Effects of Invention

In the wheel of the first aspect of the present invention, the outer wheel is configured in an annular shape, and has elastic properties. The support body rotatably supports the outer wheel. Accordingly, the wheel is moved by the outer wheel being rotated in a state in which the outer wheel has been placed on the movement path.

When the outer wheel has been placed on the movement path, the contact portion of the outer wheel that contacts the movement path is elastically deformed wholly in the radial direction toward the opposite side to the movement path. This thereby enables the elastic force of the outer wheel to be suppressed from being dispersed in an axial direction of the outer wheel, and enables cushioning performance to be raised.

In the wheel of the second aspect of the present invention, the outer wheel is configured in an annular shape, and has elastic properties. The support body rotatably supports the outer wheel. This thereby enables the wheel to be moved by being rotated in a state in which the outer wheel has been placed on the movement path.

When the outer wheel has been placed on the movement path and has undergone elastic deformation toward the opposite side to the movement path, the support body is disposed at a separation from the peripheral direction portion of the outer wheel that contacts the movement path. This thereby enables the elastic force of the outer wheel to be suppressed from being dispersed in the axial direction, and enables cushioning performance to be raised.

In the wheel of the third aspect of the present invention, the outer wheel is configured by the crawler track, and has elastic properties. The wheel is accordingly moved by being rotated in a state in which the outer wheel has been placed on the movement path.

The outer wheel is configured in a circular ring shape. Accordingly, when the outer wheel is placed on the movement path and has undergone elastic deformation toward the opposite side to the movement path, the outer wheel is elastically deformed at the contact portion that contacts the movement path and in the vicinity of the contact portion in the peripheral direction. This thereby enables the elastic force of the outer wheel to be suppressed from being dispersed in the axial direction, and enables cushioning performance to be raised.

In the wheel of the fourth aspect, the inner wheel is provided to the support body, and the inner wheel rotatably supports the outer wheel.

The inner wheel is capable of rotating. This thereby enables rotational performance of the outer wheel to be raised.

In the wheel of the fifth aspect, the suppression portion is provided to the outer periphery of the outer wheel, and the suppression portion suppresses slippage with respect to the movement path. This thereby enables slippage of the outer wheel with respect to the movement path to be suppressed.

The moving device of the sixth aspect of the present invention includes the wheel of any one of the first aspect to the fifth aspect of the present invention. The moving body supports the outer wheel, and is moved by the outer wheel being rotated in a state placed on the movement path.

As described above, the wheel of any one of the first aspect to the fifth aspect of the present invention is provided therein. This thereby enables similar advantageous effects to be obtained to those of any one out of the first aspect to the fifth aspect of the present invention.

In the moving device of the seventh aspect of the present invention, the drive means drives and rotates the outer wheel. This thereby enables the moving body to be moved by the drive force of the drive means.

### BRIEF DESCRIPTION OF DRAWINGS

Fig. 1 is a perspective view illustrating a moving device according to a first exemplary embodiment of the present invention.
Fig. 2 is a side view illustrating relevant portions of a moving device according to the first exemplary embodiment of the present invention.
Fig. 3 is a side view illustrating a state in which a moving device according to the first exemplary embodiment of the present invention has been placed on a movement path.
Fig. 4 is a graph illustrating a relationship between a movement amount of a lower end portion of an outer wheel toward an upper side (X axis) and a shape recovery force of the lower end portion of the outer wheel toward the lower side (Y axis), in a moving device according to the first exemplary embodiment of the present invention.
Fig. 5 is a side view illustrating a state in which a moving device according to a second exemplary embodiment of the present invention has been placed on a movement path.

### DESCRIPTION OF EMBODIMENTS

### First Exemplary Embodiment

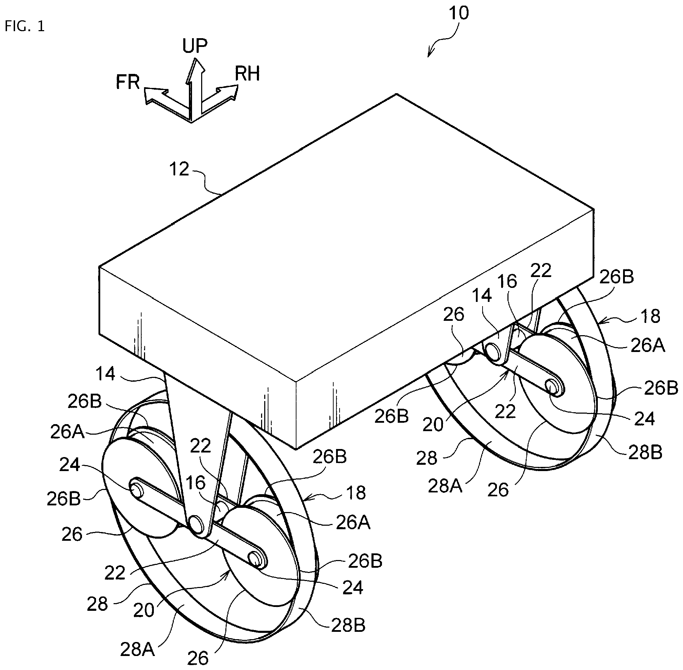

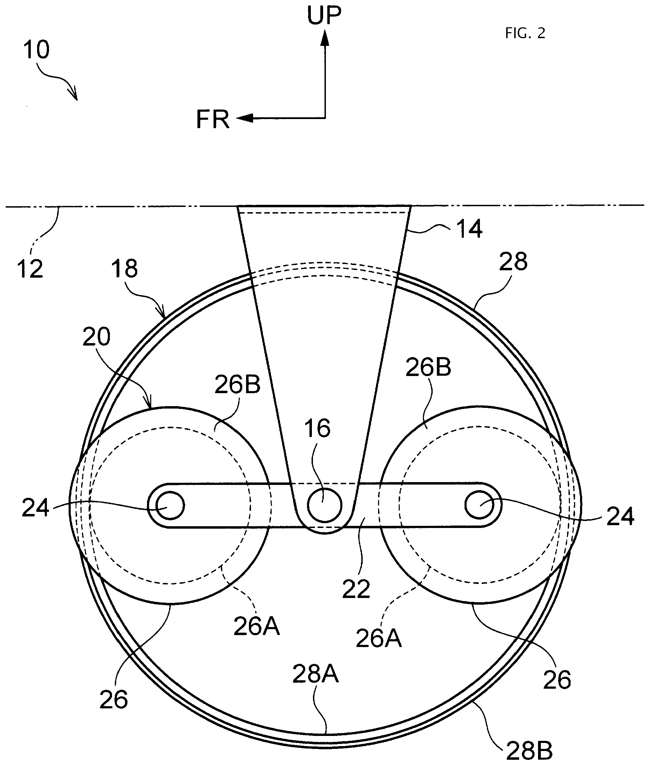

Fig. 1 is a perspective view illustrating a moving device 10 according to a first exemplary embodiment of the present invention. Fig. 2 is a side view illustrating relevant portions of the moving device 10. Note that in the drawings, the arrow FR indicates the front of the moving device 10, the arrow RH indicates the right of the moving device 10, and the arrow UP indicates upward.

As illustrated in Fig. 1 and Fig. 2, the moving device 10 according to the present exemplary embodiment includes a moving body 12. A lower face of the moving body 12 is provided with a pair of forks 14 serving as coupling members, each having a cross-section resembling an inverted U-shape. The forks 14 are disposed on a right side and a left side of the moving body 12. An upper wall of each fork 14 is fixed to the lower face of the moving body 12. Each fork 14 includes a pair of side walls facing each other along a left-right direction. A circular column shaped axle 16 is rotatably supported between the pair of side walls of each fork 14. The axial direction of the axle 16 is disposed parallel to the left-right direction.

A wheel 18 is provided between the pair of side walls of each fork 14. A support body 20 is provided at an inner portion of each wheel 18.

Each support body 20 is provided with a pair of elongated, flat plate shaped frames 22, serving as support members. The frames 22 are swingably supported on the axle 16 at their length direction centers, and are disposed parallel to a front-rear direction. Circular column shaped support shafts 24 are rotatably supported between front end portions and between rear end portions of each pair of frames 22. The axial direction of the support shafts 24 is disposed parallel to the left-right direction.

Each support body 20 is provided with a pair of substantially circular column shaped inner wheels 26. The inner wheels 26 are coaxially supported on the respective support shafts 24, and are capable of rotating about the support shafts 24. Each inner wheel 26 is disposed between the pair of frames 22, thereby restricting movement of the inner wheel 26 in the left-right direction. Each of the inner wheels 26 is provided with a coaxial circular column shaped inner wheel body 26A, and coaxial, annular flat disk shaped flanges 26B are integrally provided at both axial direction ends of the inner wheel body 26A. An external diameter dimension of each flange 26B is larger than a diameter dimension of the inner wheel bodies 26A, such that the flanges 26B project out toward a radial direction outside of the inner wheel body 26A around the entire periphery of the inner wheel body 26A.

A circular cylinder shaped (ring shaped) outer wheel 28 (continuous track, crawler track) is provided at an outer peripheral portion of the wheel 18. The outer wheel 28 is disposed at the peripheral outside of the pair of inner wheels 26. A front end portion and a rear end portion of the outer wheel 28 are disposed in a state in which movement in the left-right direction is restricted to between the respective flanges 26B of the front side and rear side inner wheels 26. A front end portion of an inner peripheral face of the outer wheel 28 is contacted by the front end of an outer peripheral face of the inner wheel body 26A of the front side inner wheel 26, and a rear end portion of the inner peripheral face of the outer wheel 28 is contacted by the rear end of an outer peripheral face of the inner wheel body 26A of the rear side inner wheel 26. Accordingly, the outer wheel 28 is supported so as to be capable of rotating around the pair of inner wheels 26, so as to enable the pair of inner wheels 26 and the outer wheel 28 to be rotated at the same time as each other by at least one out of the pair of inner wheels 26 or the outer wheel 28 being rotated.

A circular cylinder shaped rim 28A, serving as an outer wheel body, is provided at an inner portion of the outer wheel 28. The rim 28A is, for example, made from carbon fiber or from a synthetic resin, so as to configure a robust flat spring with a circular ring shape. The rim 28A is elastic and flexible, and has high rebound properties (shape recovery properties). A circular cylinder shaped suppression portion 28B is fixed to an outer peripheral face of the rim 28A. The suppression portion 28B is made from rubber, for example, and is elastic and flexible.

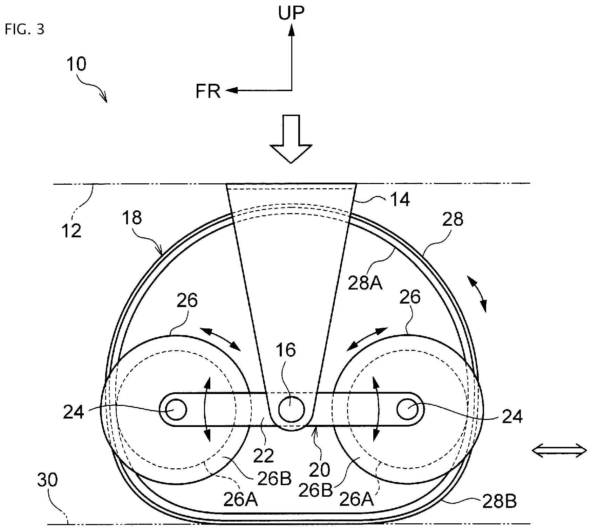

Suppose that the front end portion and the rear end portion of the outer wheel 28 were to be entrained around the outer periphery of the front side half of the front side inner wheel 26 and the rear side half of the rear side inner wheel 26 respectively, and, except for at the front end portion and the rear end portion, the outer wheel 28 were to extend in a straight line between the front side inner wheel 26 and the rear side inner wheel 26. In such a configuration, the outer wheel 28 would not exhibit cushioning properties. However, as illustrated in Fig. 2, in the present exemplary embodiment the outer wheel 28 is configured in a circular ring shape. Accordingly, as illustrated in Fig. 3, when the outer wheel 28 is placed on a movement path 30 (for example on the ground) and load acts from the pair of inner wheels 26 toward the lower side, a portion of the outer wheel 28 further to the lower side than the pair of inner wheels 26 is elastically deformed to a large extent, enabling cushioning properties to be exhibited.

Next, explanation follows regarding operation of the present exemplary embodiment.

As illustrated in Fig. 3, when the outer wheels 28 of the wheels 18 are placed on the movement path 30, such that the moving device 10 is placed on the movement path 30, downward load from the moving body 12 acts on the outer wheels 28, through the forks 14, the wheel shafts 16, the frames 22, the support shafts 24, and the inner wheels 26. Accordingly, a lower end portion (a portion contacting the movement path 30, a peripheral direction portion that contacts the movement path 30) of each outer wheel 28 is elastically deformed toward the opposite side to the movement path 30, and assumes a shape conforming to the surface (upper face) of the movement path 30. Moreover, the outer wheel 28 is elastically deformed around the inner wheels 26, enlarging the outer wheel 28 along the front-rear direction in a state in which the curvature of the outer wheel 28 is increased in the vicinity of the lower side of the inner wheels 26.

When the moving device 10 moves along the front-rear direction, the outer wheel 28 is rotated, rotating the inner wheels 26. Moreover, the frames 22 swing with respect to the forks 14 as necessary, the wheel 18 is moved in the front-rear direction, and the moving body 12 is moved in the front-rear direction.

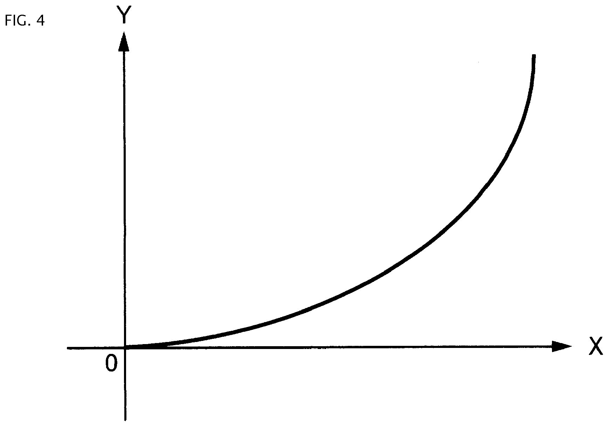

Note that when the moving device 10 is placed on the movement path 30, the lower end portion of the outer wheel 28 is elastically deformed wholly in the radial direction toward the opposite side to the movement path 30, and the pair of inner wheels 26 are moved away from the lower end portion of the outer wheel 28 toward the upper side. Accordingly, elastic force of the outer wheel 28 can be prevented from dispersing in the axial direction of the outer wheel 28, and elastic force of the outer wheel 28 can be made to act efficiently toward the side of the movement path 30. As illustrated in Fig. 4, this enables the ratio of increase in a shape recovery force of the lower end portion of the outer wheel 28 toward the lower side (see the Y-axis) with respect to an increase in a movement amount of a lower end portion of the outer wheel 28 toward the upper side (see the X-axis) to be made larger. This thereby enables cushioning properties of the moving device 10 (wheel 18) to be raised when the moving device 10 moves in the front-rear direction, and enables smooth movement of the moving device 10 at high speed even when the movement path 30 runs over rough ground (for example a gravel path).

Each of the wheels 18 is also configured such that the outer wheel 28 is rotatably supported by the pair of rotatable inner wheels 26. This thereby enables efficient (smooth) rotation of the outer wheel 28, enabling rotation performance of the outer wheel 28 to be raised, and enables efficient movement of the moving device 10 (wheel 18) in the front-rear direction even when the movement path 30 runs over rough ground. Moreover, unlike a tire wheel assembly, the wheel 18 can be made smaller and made lighter, enabling a reduction in the cost of the wheel 18, and enabling the wheel 18 to be easily applied to a small moving device 10.

The suppression portion 28B is fixed to the outer peripheral portion of the outer wheel 28, and the suppression portion 28B suppresses slippage with respect to the movement path 30. This thereby enables slippage of the outer wheel 28 with respect to the movement path 30 to be suppressed. Moreover, unlike in a tire wheel assembly, the possibility of the outer wheel 28 sustaining a puncture can be eliminated.

Moreover, the rim 28A of the outer wheel 28 is configured by a robust flat spring. This thereby enables the occurrence of wobble of the moving device 10 (of the wheel 18) to be suppressed during movement of the moving device 10 in the front-rear direction.

Supposing that the outer wheel 28 were to break, the load from the moving body 12 can be borne by the inner wheels 26 through the forks 14, the wheel shaft 16, the frames 22, and the support shafts 24. Accordingly, the moving device 10 can be moved by rotating the inner wheels 26, thereby enabling the moving device 10 to be moved easily.

### Second Exemplary Embodiment

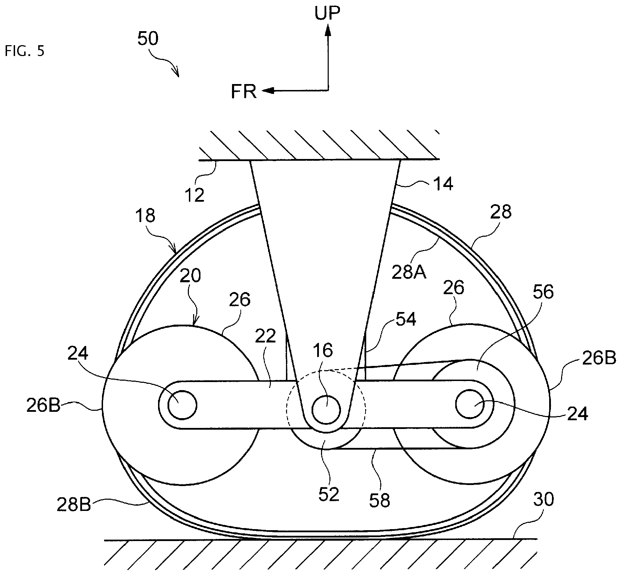

Fig. 5 is a side view illustrating a state in which a moving device 50 of a second exemplary embodiment of the present invention has been placed on the movement path 30.

The moving device 50 according to the present exemplary embodiment is configured similarly to the first exemplary embodiment described above, but differs in the following points.

As illustrated in Fig. 5, in the moving device 50 according to the present exemplary embodiment, the moving body 12 is provided with a motor (not illustrated in the drawings) serving as a drive means, and a first sprocket 52 that is coaxially and rotatably supported on the wheel shaft 16 of the forks 14 and configures a transmission means. The motor and the first sprocket 52 are coupled together by a first chain 54 configuring the transmission means.

A second sprocket 56 configuring the transmission means is coaxially and rotatably supported on one (for example the rear side) support shaft 24 of the support body 20. The second sprocket 56 is coupled to the first sprocket 52 by a second chain 58 configuring the transmission means. The second sprocket 56 is fixed to one (for example the rear side) inner wheel 26, such that the second sprocket 56 and the one inner wheel 26 are capable of rotating together as a unit.

Outer teeth (not illustrated in the drawings) and inner teeth (not illustrated in the drawings), for example, each configuring the transmission means, are respectively provided to the entire outer peripheral face of the inner wheel body 26A of the one inner wheel 26, and to the entire inner peripheral face of the outer wheel 28 (rim 28A). The outer teeth and the inner teeth mesh together with each other so as to limit relative rotation (slippage) between the inner wheels 26 and the outer wheel 28.

The present exemplary embodiment is also capable of exhibiting similar operation and advantageous effects to those of the first exemplary embodiment described above.

Moreover, driving the motor transmits motive force (drive force) of the motor to the outer wheel 28 (inner teeth), through the first chain 54, the first sprocket 52, the second chain 58, the second sprocket 56, and the one inner wheel 26 (outer teeth). This thereby enables the outer wheel 28 to be rotated by the motive force of the motor, enabling the moving device 10 (wheels 18) to be moved in the front-rear direction.

Note that in the first exemplary embodiment and the second exemplary embodiment, the forks 14 are fixed to the lower face of the moving body 12. However, the forks 14 may be supported so as to be rotatable about a vertical axis.

Moreover, each support body 20 is provided with a pair of the inner wheels 26 in the first exemplary embodiment and the second exemplary embodiment. However, each support body 20 may be provided with three or more inner wheels 26.

Moreover, the rim 28A of the outer wheel 28 is configured by a circular ring shaped, robust flat spring in the first exemplary embodiment and the second exemplary embodiment described above. However, the rim 28A of the outer wheel 28 may be configured by a circular ring shaped, robust coil spring or pipe member.

Moreover, the moving device 10 is provided with the pair of forks 14 (each including the wheel shaft 16) and the pair of the wheels 18 in the first exemplary embodiment and the second exemplary embodiment. However, the moving device 10 may be respectively provided with a single, or three or more, of the forks 14 (including the wheel shaft 16) and the wheels 18.

The moving device 10 of the first exemplary embodiment and the second exemplary embodiment may be applied to handcarts (shopping carts and the like), wheelchairs, pushchairs, dollies, roller suitcases, roller skates, automobiles, motorcycles, bicycles, heavy industrial equipment, or space exploration vehicles.

### Explanation of the Reference Numerals

- 10: moving device

- 12: moving body
- 18: wheel
- 20: support body
- 26: inner wheels
- 28: outer wheel
- 28B: suppression portion
- 30: movement path
- 50: moving device

## Claims

1. A wheel (18) comprising:
an outer wheel (28) that is configured in an annular shape, that has elastic properties, and that, when placed on a movement path (30), includes a contact portion contacting the movement path (30) and undergoing elastic deformation wholly in a radial direction toward the opposite side to the movement path (30), and a support body (20),
**characterized in that** the support body (20) rotatably supports the outer wheel (28), and that the outer wheel (28) is capable of idling rotation under inertia when the outer wheel (28) is not placed on the movement path (30).

2. A wheel (18) comprising:
an outer wheel (28) that is configured in an annular shape and that has elastic properties, and
a support body (20) that is disposed at a separation from a peripheral direction portion of the outer wheel (28), with the peripheral portion contacting a movement path (30) of the outer wheel (28) when the outer wheel (28) has been placed on the movement path (30) and is undergoing elastic deformation toward the opposite side to the movement path (30), **characterized in that** the support body (20) rotatably supports the outer wheel (28) and that the outer wheel (28) is capable of idling rotation under inertia when the outer wheel (28) is not placed on the movement path (30).

3. A wheel (18) comprising an outer wheel (28) that is configured by a circular ring shaped crawler track and has elastic properties,
**characterized in that** the outer wheel (28) is capable of idling rotation under inertia when the outer wheel (28) is not placed on a movement path (30).

4. The wheel (18) of either claim 1 or claim 2, further comprising an inner wheel (26) that is provided to the support body (20), that is capable of rotating, and that rotatably supports the outer wheel (28).

5. The wheel (18) of any one of claim 1 to claim 4, further comprising a suppression portion (28B) that is provided to an outer periphery of the outer wheel (28), and that suppresses slippage with respect to the movement path (30).

6. A moving device (10, 50) comprising:
the wheel (18) of any one of claim 1 to claim 5; and
a moving body (12) that supports the outer wheel (28), and that is moved by the outer wheel (28) being rotated in a state placed on the movement path (30).

7. The moving device (10, 50) of claim 6, further comprising drive means that drives and rotates the outer wheel (28).

## Patentansprüche

1. Rad (18), umfassend:
ein Außenrad (28), das ringförmig ausgebildet ist, das elastische Eigenschaften aufweist, und das, wenn es auf einem Bewegungspfad (30) platziert ist, einen Kontaktbereich beinhaltet, der den Bewegungspfad (30) berührt und eine elastische Verformung gänzlich in einer radialen Richtung hin zu der gegenüberliegenden Seite des Bewegungspfads (30) erfährt, und einen Trägerkörper (20),
**dadurch gekennzeichnet, dass** der Trägerkörper (20) das Außenrad (28) drehbar trägt, und dass das Außenrad (28) zu Leerlaufdrehungen unter Trägheit fähig ist, wenn das Außenrad (28) nicht auf dem Bewegungspfad (30) platziert ist.

2. Rad (18), umfassend:
ein Außenrad (28), das ringförmig ausgebildet ist und das elastische Eigenschaften aufweist, und
einen Trägerkörper (20), der beabstandet von einem peripheren Richtungsbereich des Außenrads (28) angeordnet ist, wobei der periphere Bereich einen Bewegungspfad (30) des Außenrads (28) berührt, wenn das Außenrad (28) auf dem Bewegungspfad (30) platziert wurde, und eine elastische Verformung hin zu der gegenüberliegenden Seite des Bewegungspfads (30) erfährt,
**dadurch gekennzeichnet, dass** derTrägerkörper (20) das Außenrad (28) drehbar trägt, und dass das Außenrad (28) zu Leerlaufdrehungen unter Trägheit fähig ist, wenn das Außenrad (28) nicht auf dem Bewegungspfad (30) platziert ist.

3. Rad (18) umfassend ein Außenrad (28), das als kreisringförmiges Raupenband ausgebildet ist und elastische Eigenschaften aufweist,
**dadurch gekennzeichnet, dass** das Außenrad (28) zu Leerlaufdrehungen unter Trägheit fähig ist, wenn das Außenrad (28) nicht auf dem Bewegungspfad (30) platziert ist.

4. Rad (18) nach Anspruch 1 oder Anspruch 2, weiter umfassend ein Innenrad (26), das an dem Trägerkörper (20) bereitgestellt ist, das fähig ist, sich zu drehen, und das drehbar das Außenrad (28) trägt.

5. Rad (18) nach einem von Anspruch 1 bis Anspruch 4, weiter umfassend einen Unterdrückungsbereich (28B), der an einer Außenperipherie des Außenrads (28) bereitgestellt ist, und der Schlupf bezüglich des Bewegungspfads (30) unterdrückt.

6. Bewegungsvorrichtung (10, 50), umfassend:
das Rad (18) nach einem von Anspruch 1 bis Anspruch 5; und
einen Bewegungskörper (12), der das Außenrad (28) trägt, und dadurch bewegt wird, dass das Außenrad (28) in einem Zustand, in dem es auf dem Bewegungspfad (30) platziert ist, gedreht wird.

7. Bewegungsvorrichtung (10, 50) nach Anspruch 6, weiter umfassend ein Antriebsmittel, das das Außenrad (28) antreibt und dreht.

## Revendications

1. Roue (18) comprenant :
une roue externe (28) qui est configurée selon une forme annulaire, qui a des propriétés élastiques et qui, lorsqu'elle est placée sur une trajectoire de déplacement (30), comprend une partie de contact en contact avec la trajectoire de déplacement (30) et subissant la déformation élastique, dans son ensemble, dans une direction radiale vers le côté opposé à la trajectoire de déplacement (30), et un corps de support (20),
**caractérisée en ce que** le corps de support (20) supporte, en rotation, la roue externe (28) et **en ce que** la roue externe (28) est capable de tourner au ralenti sous l'influence de l'inertie lorsque la roue externe (28) n'est pas placée sur la trajectoire de déplacement (30).

2. Roue (18) comprenant :
une roue externe (28) qui est configurée selon une forme annulaire et qui a des propriétés élastiques, et
un corps de support (20) qui est disposé, au niveau d'une séparation par rapport à une partie dans la direction périphérique de la roue externe (28), avec la partie périphérique en contact avec une trajectoire de déplacement (30) de la roue externe (28), lorsque la roue externe (28) a été placée sur la trajectoire de déplacement (30) et subit la déformation élastique vers le côté opposé à la trajectoire de déplacement (30), **caractérisée en ce que** le corps de support (20) supporte, en rotation, la roue externe (28) et **en ce que** la roue externe (28) peut tourner au ralenti sous l'influence de l'inertie lorsque la roue externe (28) n'est pas placée sur la trajectoire de déplacement (30).

3. Roue (18) comprenant une roue externe (28) qui est configurée par une chenille en forme d'anneau circulaire et a des propriétés élastiques,
**caractérisée en ce que** la roue externe (28) est capable de tourner au ralenti sous l'influence de l'inertie lorsque la roue externe (28) n'est pas placée sur la trajectoire de déplacement (30).

4. Roue (18) selon la revendication 1 ou la revendication 2, comprenant en outre une roue interne (26) qui est prévue sur le corps de support (20), qui est capable de tourner et qui supporte, en rotation, la roue externe (28).

5. Roue (18) selon l'une quelconque des revendications 1 à 4, comprenant en outre une partie de suppression (28B) qui est prévue sur une périphérie externe de la roue externe (28) et qui supprime le glissement par rapport à la trajectoire de déplacement (30).

6. Dispositif mobile (10, 50) comprenant :
la roue (18) selon l'une quelconque des revendications 1 à 5 ; et
un corps mobile (12) qui supporte la roue externe (28) et qui est déplacé par la roue externe (28) qui tourne dans un état dans lequel elle est placée sur la trajectoire de déplacement (30).

7. Dispositif mobile (10, 50) selon la revendication 6, comprenant en outre un moyen d'entraînement qui entraîne et fait tourner la roue externe (28).
